# EUROPÄISCHE PATENTANMELDUNG

(11) **EP 1 239 248 A2**
(43) Veröffentlichungstag der Anmeldung: **11.09.2002**
(21) Anmeldenummer: 02002219.0
(22) Anmeldetag: 30.01.2002
(51) Int. Cl.: F27D 3/15

(54) **Verfharen und Einrichtung zum Auswechseln einer Schieberbaugruppe an einem metallurgischen Gefäss, insbesondere an einem Elektroschmelzofen**

(30) Priorität: 09.03.2001 DE 10111273
(71) Anmelder: SMS Demag AG, 40237 Düsseldorf (DE)
(72) Erfinder: Figge, Dieter, 45147 Essen (DE)
(74) Vertreter: Valentin, Ekkehard, Dipl.-Ing.

(57) **Zusammenfassung**

Ein Verfahren und eine Einrichtung zum Auswechseln einer Schieberbaugruppe (1) an einem metallurgischen Gefäß (2), insbesondere an einem Elektroschmelzofen (2a), wobei das Gefäß (2) bis zu einem Restsumpf (3) entleert wird, kann bei stationären, nichtkippbaren Öfen, dahingehend erzielt werden, dass gegen Ende der Schieberstandzeit der Abstichkanal (8) durch einen in das Innere (9) des Gefäßes (2) eingefahrenen Schließstopfen (11) verschlossen wird und dass nach Auslaufen der Restschmelze aus dem geschlossenen Abstichkanal (8) der verschlissene Schieber (1a) gegen einen neuen Schieber (1b) ausgewechselt und darnach der Schließstopfen (11) aus dem Gefäß (2) heraus in eine Parkposition (5a) gefahren wird.

## Beschreibung

Die Erfindung betrifft ein Verfahren und eine Einrichtung zum Auswechseln einer Schieberbaugruppe an einem metallurgischen Gefäß, insbesondere an einem Elektroschmelzofen, wobei das Gefäß bis zu einem Restsumpf entleert wird.

Elektrolichtbogen-Öfen zum Schmelzen von Schrott, werden immer häufiger für die Stahlherstellung eingesetzt, weil ein solches Verfahren wirtschaftlicher arbeitet als der klassische Weg über den Hochofen und anschließendem Frischen des Roheisens im Konverter. Es werden derzeit Elektrolichtbogen-Öfen mit einem kippbaren Gefäß eingesetzt, das am Abstichende einen Erker aufweist, in dem ein exzentrischer Bodenabstich angeordnet ist.

In zurückgekippter Lage wird der Einfachschieber geschlossen, der Abstichkanal mit Stopfmasse gefüllt und der nächste Schmelzvorgang gestartet. Der Schmelzvorgang nimmt etwa 40 min in Anspruch. Nach Fertigstellen der Stahlschmelze, erfolgt der Abstichvorgang durch Kippen des Gefäßes in Richtung des Erkers, wobei der Einfachschieber geöffnet wird. Da auf der Stahlplatte des Einfachschiebers im Abstichkanal Füllsand steht, kommt die Stahlschmelze nicht in Berührung mit der Stahlplatte des Schiebers.

Für den Fall aber, dass aus Gründen der Energiewirtschaft ein solcher Elektrolichtbogen-Ofen mit Erker nicht eingesetzt werden soll, und die Kipplagerung und der Kippantrieb bei Neukonstruktionen einen erheblichen Anteil der Investition einnimmt, kann auch von einem nichtkippbaren, d.h. nicht schwenkbaren Ofen ohne Erker ausgegangen werden, der zudem in seiner Bauform sehr einfach wird.

Derartige metallurgische Gefäße werden mehr und mehr darauf abgestellt, die Produktion weitgehend ohne Unterbrechung durchführen zu können. Dabei soll ein solcher Ofen niemals ganz entleert werden. Vielmehr soll zum schnellen Einschmelzen ein Restsumpf erhalten bleiben. Ein solcher Restsumpf wiederum bedingt, dass der zum Abstechen notwendige Schieber nicht gewechselt werden kann. Es ist aber für eine kontinuierliche Erschmelzung von Stahl unabdingbar, dass der Schieber nach ca. 15 Schmelzen, die etwa einem Arbeitstag entsprechen, gewechselt werden muss. Der Wechsel des Abstichsystems soll daher möglich sein, während der Ofen weiterarbeitet.

Der derzeitige Einfachschieber , der auch bei kippbaren Öfen angewendet wird, erfüllt diese Voraussetzungen nicht. Beim stationären Ofen berührt der Flüssigstahl die Stahlplatte. Ein Heranbringen von Füllmaterial ist nicht möglich.

Der Erfindung liegt die Aufgabe zugrunde, den Wechsel einer Schiebereinrichtung auch bei stationären, nichtkippbaren Öfen zu ermöglichen, wobei ein Restsumpf nach dem Abstechen im Ofen erhalten bleibt, um den nächsten Einschmelzvorgang zu unterstützen.

Die gestellte Aufgabe wird erfindungsgemäß dadurch gelöst, dass gegen Ende der Schieberstandzeit der Abstichkanal durch einen in das Innere des Gefäßes eingefahrenen Schließstopfen verschlossen wird und dass nach Auslaufen der Restschmelze aus dem geschlossenen Abstichkanal der verschlissene Schieber gegen einen neuen Schieber ausgewechselt und darnach der Schließstopfen aus dem Gefäß heraus in eine Parkposition gefahren wird. Im Betrieb arbeitet der Ofen mit dem Schieber, über dem Füllmaterial den Zutritt zur Stahlplatte verhindert. Für den Fall, dass nach ca. 15 Schmelzen ein Wechsel des Schiebers ansteht, wird der Schließstopfen in den Ofen auf die Abstichöffnung des Lochsteins gefahren und dichtet das Gefäß von innen her ab. Nach dem Auslaufen der Restschmelze kann der Austausch des verschlissenen Schiebers gegen einen neuen erfolgen. Dadurch wird erheblich Zeit gespart, indem Nebenzeitanteile in die Hauptzeit der Schmelzencharge verlegt wird. Die Kosten für den Schließstopfen und dessen Nebeneinrichtungen werden daher durch eine höhere Produktionsmenge bei weitem wieder aufgewogen, sogar noch ein Gewinn erzielt.

Eine Vorgehensweise, den Schieber zu wechseln, besteht darin, dass nach dem Anfahren des Schließstopfens in Schließposition und nach dem Auslaufen der Restschmelze ein Schieberbaugruppen-Manipulator unter die Schieberbaugruppe gefahren, der verschlissene Schieber gestützt, durch Rütteln gelöst wird und dass danach per Kran der verschlissene Schieber ausgebracht und der neue Schieber eingebaut wird.

Weiterhin wird so vorgegangen, dass zusammen mit dem Schieber ein Füllmaterial-Behälter mit Füllmaterial und Zuführeinrichtung gewechselt wird. Dadurch ist in jeder Phase des Betriebsablaufs Füllmaterial vorhanden und kann jederzeit eingebracht werden.

Ein schnelles Einfahren des Schließstopfens wird ferner dadurch bewirkt, dass die Schließstopfenbewegung senkrecht oder im Bogen und der Schieberausbau oder der Schiebereinbau senkrecht oder unter einem 45°-Winkel ausgeführt werden.

Die Einrichtung zum Auswechseln einer Schieberbaugruppe an einem metallurgischen Gefäß, insbesondere an einem Elektroschmelzofen, der senkrecht oder unter einem spitzen Winkel zur Horizontalen abstechbar ist, wobei das Gefäß bis auf einen Restsumpf entleerbar ist, löst die gestellte Aufgabe erfindungsgemäß dadurch, dass einer seitlichen Öffnung in der Gefäßwand ein Schließstopfen-Manipulator mit zumindest zwei unabhängigen Bewegungsrichtungen zugeordnet ist und dass im Bereich des Abstichkanals des Gefäßes ein Schieberbaugruppen-Manipulator zum Ausbau oder Einbau einer Schieberbaugruppe vorgesehen ist. Dadurch wird der Vorteil erzielt, in weniger als einer Minute einen Schieberwechsel durchführen zu können, so dass in der Zwischenzeit der Schließstopfen eine ausreichende Standzeit aufweist.

Nach weiteren Merkmalen wird vorgeschlagen, dass der Schieber aus einem Drei-Stellungs-Schieber besteht. Dadurch gibt es eine Stellung für das Abstoppen der Stahlschmelze, eine Stellung für den Durchtritt des Füllmaterials und eine Stellung für den Durchtritt von Flüssigstahl.

In Ausgestaltung ist vorgesehen, dass an einem gemeinsamen Rahmen der Drei-Stellungs-Schieber mit einem Antrieb und ein Füllmaterial-Behälter mit einer Füllmaterial-Zuführeinrichtung, die ein Transportrohr aufweist, vorgesehen ist, das von dem Füllmaterial-Behälter bis zur Durchgangsöffnung des sich in Mittelstellung befindlichen Drei-Stellungs-Schiebers geführt ist. Dadurch kann eine sehr kompakte Baueinheit aus dem Schieber und der Füllmaterial-Zuführeinrichtung erzielt werden.

Zur Förderung des Füllmaterials ist ferner vorgesehen, dass in dem Füllmaterial-Behälter ein an das Transportrohr angeschlossener Schubkolben angeordnet ist. Dadurch wird erheblich an Raum gespart und das Füllmaterial gelangt ohne weiteres vor den Schubkolben, der es in Richtung Transportrohr fördert.

Nach weiteren Merkmalen ist vorgesehen, dass der Schließstopfen-Manipulator mit einer Steuerung für quer und parallel zur Gefäßwandöffnung und parallel zur Abstichkanalachse gerichteten Bewegungen ausgestattet ist. Die Bewegungen können nach einem Programm ausgeführt werden und sind daher beliebig wiederholbar.

Eine andere Ausgestaltung sieht vor, dass der Schließstopfen-Manipulator mit einer ersten Führung, die parallel zur Abstichkanalachse, einer zweiten Führung, die parallel zur Ebene der Gefäßwandöffnung und mit einer dritten Führung, die senkrecht zur Ebene der Gefäßwandöffnung verläuft, versehen ist. Dementsprechend bestehen für die Bewegung des Schließstopfens drei Freiheitsgrade.

Eine Verbesserung sieht ferner vor, dass der Füllmaterial-Behälter mit dem Transportrohr und dem Schubkolben zusammen mit der Schieberbaugruppe auf einem gemeinsamen Tragrahmen angeordnet sind. Mit der Zusammenlegung des Füllmaterial-Behälters und der Schieberbaugruppe wird eine kompakte Einheit geschaffen, die leicht transportiert und montiert werden kann.

Den Gegebenheiten der Metallurgie am Lochstein eines Gefäßes wird ferner dadurch Rechnung getragen, dass der Tragrahmen in einer horizontalen Führungsbahn an den Abstichkanal mittels eines horizontalen Antriebs anstellbar ist.

In dieser Hinsicht besteht eine zusätzliche Verbesserung darin, dass die horizontale Führungsbahn mittels eines weiteren Antriebs im Winkel zur Horizontalen verstellbar ist.

Eine weitere Bewegungsrichtung für diesen Tragrahmen wird dadurch geschaffen, dass der gemeinsame Tragrahmen auf einem Tragholm der horizontalen Führungsbahn mittels eines Hubantriebs in der Höhe verstellbar ist. Dadurch werden sämtliche möglichen Lageabweichungen am Lochstein des matallurgischen Gefäßes berücksichtigt, so dass ein schneller Wechsel der Schieberbaugruppe stattfinden kann.

Schließlich bestehen Merkmale darin, dass der Schließstopfen an einen Lochstein mit im Raum oder zum Gefäßbodenbereich senkrechtem oder von der Senkrechten in einem Bogen von 45° umlenkenden Abstichkanal anstellbar ist.

In der Zeichnung sind Ausführungsbeispiele der Erfindung dargestellt und werden nachfolgend näher erläutert.

Es zeigen:
- *Fig. 1*: eine Ansicht einer Ofenbühne mit einem Elektroschmelzofen und schrägem Abstichkanal,
- *Fig. 2*: die Ansicht wie Fig. 1 mit senkrechtem Abstichkanal,
- *Fig*. *3*: einen senkrechten Schnitt durch den schrägen Abstichkanal mit einer Schieberbaugruppe und Füllmaterial-Behälter,
- *Fig*. *4*: eine Ansicht des Schließstopfens in 45°-Ausführung mit dem Schließ-stopfen-Manipulator im Teilschnitt,
- *Fig*. *5*: einen Schnitt durch die Gesamt-Ofenanlage mit Elektroschmelzofen, dem Schließstopfen-Manipulator und dem Schieber-Manipulator,
- *Fig*. *6*: als Einzelheit den schrägen Schließstopfen mit einem speziellen Lochstein,
- *Fig*. *7*: diese Einzelheit eines senkrechten Schließstopfens mit einem anderen speziellen Lochstein und
- *Fig*. *8*: in einem Teilschnitt mit Seitenansicht die Gesamtanlage für einen schräg arbeitenden Schließstopfen-Manipulator und dem Schieber-Manipulator.

Das Verfahren zum Auswechseln einer Schieberbaugruppe 1 an einem metallurgischen Gefäß 2, das insbesondere aus einem Elektroschmelzofen 2a besteht, der ohne Drehung und ohne Kippung arbeitet, geht von einem Entleeren des Gefäßes 2 bis auf einen Restsumpf 3 aus. Die Schlacke 4 wird über ein getrenntes Schiebersystem 5 in einen Schlackekübel 6 abgelassen. Der Elektroschmelzofen 2a wird in eine Stahlpfanne 7 entleert.

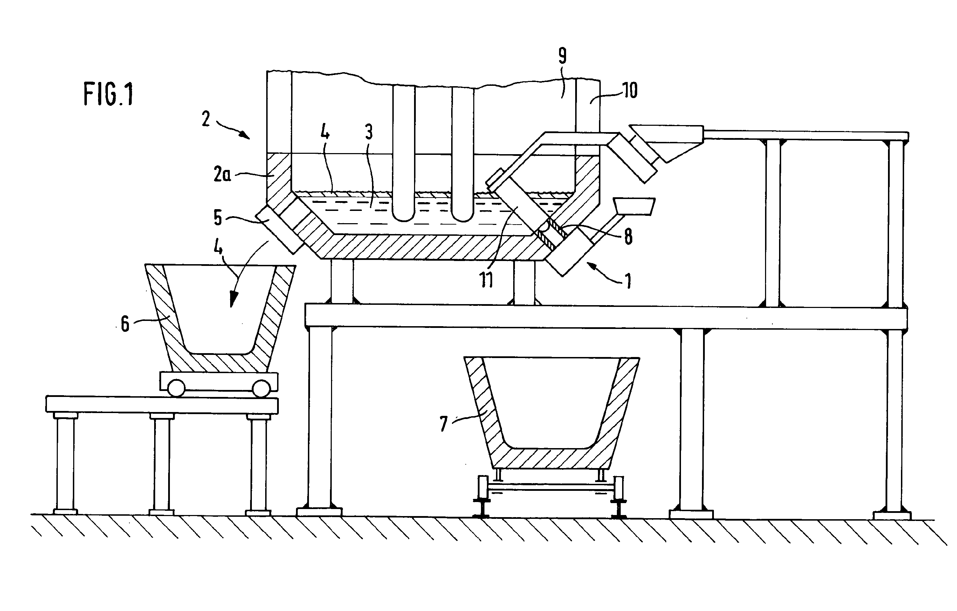

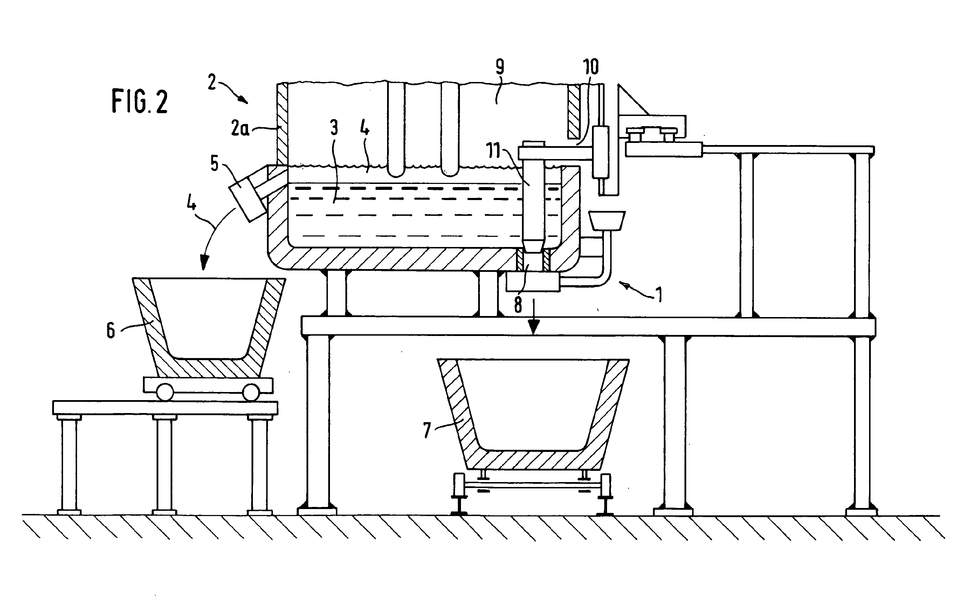

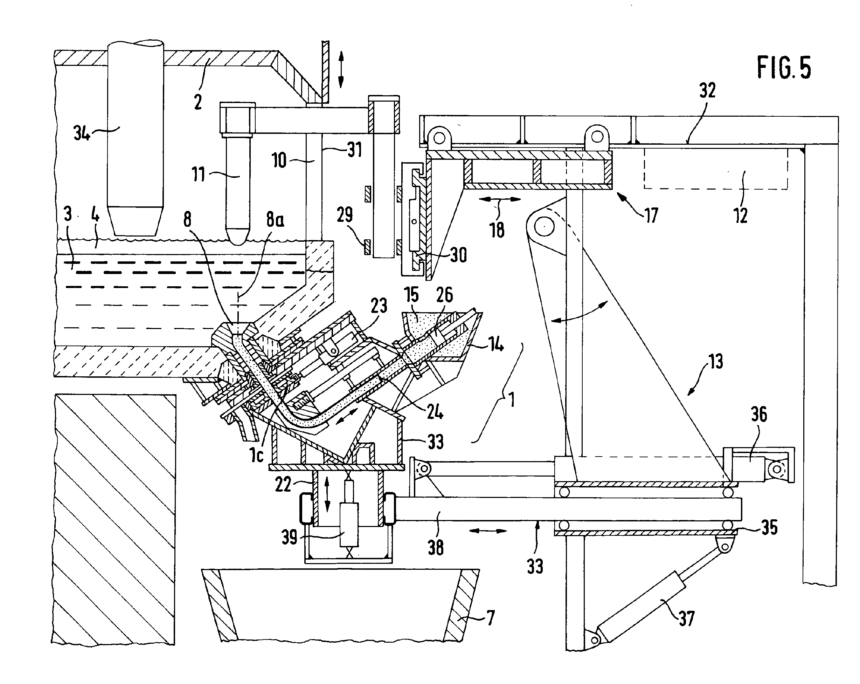

Das Abstichloch 8 verläuft mit seiner Achse unter einem 45°-Winkel (Fig. 1) oder senkrecht (Fig. 2), wobei gegen Ende des Abstechens der Abstichkanal 8 durch einen in das Innere 9 durch eine Öffnung 10 in der Seitenwand eingefahrenen Schließstopfen 11 verschließt. Nach Auslaufen der Restschmelze aus dem Abstichkanal 8 wird der verschlissene Schieber 1a gegen einen neuen Schieber 1b ausgewechselt und der Schließstopfen 11 wird aus dem Gefäß 2 heraus in eine Parkposition 12 gefahren (vgl. Fig. 5).

Nach dem Anfahren des Schließstopfens 11 in die Schließposition (Fig. 1 und 2) und nach dem Auslaufen der Restschmelze wird ein Schieberbaugruppen-Manipulator 13 unter die Schieberbaugruppe 1 gefahren, der verschlissene Schieber 1a wird gestützt, durch Rütteln gelöst und danach per Kran der verschlissene Schieber 1a ausgebracht und der neue Schieber 1b eingebaut.

In der Schieberbaugruppe 1 wird zusammen mit dem neuen Schieber 1b ein Füllmaterial-Behälter 14 mit Füllmaterial 15 und einer Zuführeinrichtung 16 gewechselt.

Die Schließstopfenbewegung kann senkrecht (Fig. 2) oder im Bogen und der Schieberausbau oder der Schiebereinbau können senkrecht (Fig. 2) oder unter einem 45°-Winkel (Fig. 1) ausgeführt werden.

Die Einrichtung zum Auswechseln der Schieberbaugruppe 1 sieht der seitlichen Öffnung 10 in der Gefäßwand 2b zugeordnet einen Schließstopfen-Manipulator 17 vor, mit zumindest zwei unabhängigen Bewegungsrichtungen 18. Im Bereich des Abstichkanals 8 des Gefäßes 2 ist der Schieberbaugruppen-Manipulator 13 zum Ausbau oder zum Einbau einer Schieberbaugruppe 1 vorgesehen.

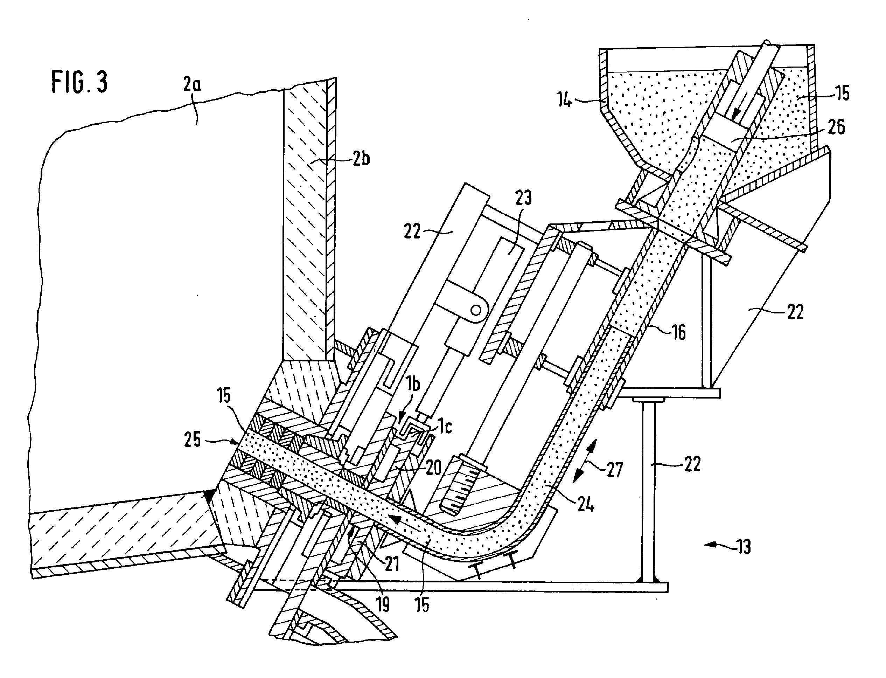

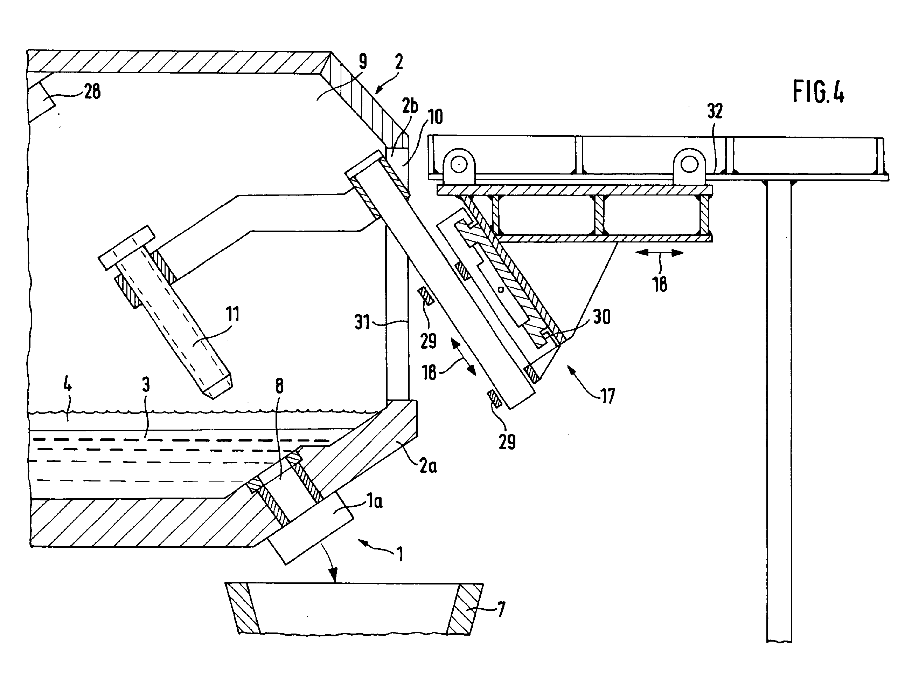

Der Schieber 1a, 1b besteht aus einem Drei-Stellungs-Schieber 1c (Fig.3). In der gezeichneten Stellung 19 kann Füllmaterial 15 bis in den Abstichkanal 8 hindurchtreten. In der Stellung 20 ist der Durchtritt von Stahlschmelze gesperrt. In der Stellung 21 kann Stahl durch ein Keramikrohr austreten.

Gemäß Fig. 3 ist an einem gemeinsamen Rahmen 22 der Drei-Stellungs-Schieber 1c mit einem Antrieb 23, der aus einem angelenkten Hydraulikzylinder mit Schubkolben 26 besteht, vorgesehen. Der Füllmaterial-Behälter 14, die Füllmaterial-Zuführeinrichtung 16 und ein Transportrohr 24 werden ebenfalls von dem Rahmen 22 getragen. Das Transportrohr 24 führt das Füllmaterial 15 bis zur Durchgangsöffnung 25 des sich in Mittelstellung 19 befindlichen Drei-Stellungs-Schiebers 1c.

Der in dem Füllmaterial-Behälter 14 an das Transportrohr 24 angeschlossene Schubkolben 26 drückt Füllmaterial 15 in den Abstichkanal 8 vor die Schieberplatte. Der Antrieb 23 bewegt die Schieberplatte mit dem verbundenen Transportrohr 24 für Füllmaterial 15.

Der Schließstopfen-Manipulator 17 ist mit einer Steuerung für den Schließstopfen 11 (nach einem Joy-Stick geführten Steuerverfahren) ausgerüstet. Die Stellung des Schließstopfens 11 kann von Hand nach einem Kamerabild einer geschützten Kamera 28 gesteuert werden. Die Steuerung führt den Schließstopfen-Manipulator 17 quer und parallel zur Gefäßwandöffnung 10 oder parallel zur Abstichkanalachse 8a mit entsprechenden Bewegungsrichtungen 18.

Der Schließstopfen-Manipulator 17 weist eine erste Führung 29 auf, die parallel zur Abstichkanalachse 8a verläuft, eine zweite Führung 30, die parallel zur Ebene 31 der Gefäßwandöffnung 10 verläuft, und eine dritte Führung 32, die senkrecht zur Ebene 31 der Gefäßwandöffnung 10 verläuft.

Wie aus Fig. 5 ersichtlich ist, besteht der Schieberbaugruppen-Manipulator 13 aus den Teilen 38, 39, 33, 35, 36 und 37. In den winklig muldenförmig ausgeformten Tragrahmen 33 wird (was nachstehend anhand eines Wechselvorgangs noch beschrieben wird), als Einheit der Schieber mit dem Keramikrohr, das Transportrohr 24 mit dem Füllmaterialbehälter 14 und dem Antrieb 26 per Kran ausgewechselt. Die Einheit wird mit den nachstehend beschriebenen Klemmbacken zwischen Schieber und Manipulator 13 vorübergehend verbunden. Der durch die Gefäßwandöffnung 10 eingefahrene Schließstopfen 11 arbeitet senkrecht im Abstand zu den Elektroden 34.

Der Tragrahmen 33 als Teil des Schieberbaugruppen-Manipulators 13 ist in einer horizontalen Führungsbahn 35 an den Abstichkanal 8 mittels eines horizontalen Antriebs 36 anstellbar. Der Antrieb 36 kann aus einem Kolben-Zylinder-Antrieb bestehen (wie gezeichnet) und die Führungsbahn 35 kann aus einzelnen Rollenpaaren bestehen, die am holmartigen Tragrahmen 33 anliegen.

Um ein passgenaues Anfahren der Schieberbaugruppe 1 zu gewährleisten, ist die horizontale Führungsbahn 36 mittels eines weiteren Antriebs 37 im Winkel zur Horizontalen einstellbar, wodurch Ungenauigkeiten der Konstruktion ausgeglichen werden. Der Tragrahmen 33 kann auch aus einem Tragholm 38 gebildet sein.

Der gemeinsame Tragrahmen 22 bzw. 33 ist ferner auf dem Tragholm 38 mittels eines Hubantriebes 39 in der Höhe verstellbar. Die Schieberbaugruppe 1 kann daher in allen drei Raumachsen am Abstichkanal 8 justiert angestellt werden.

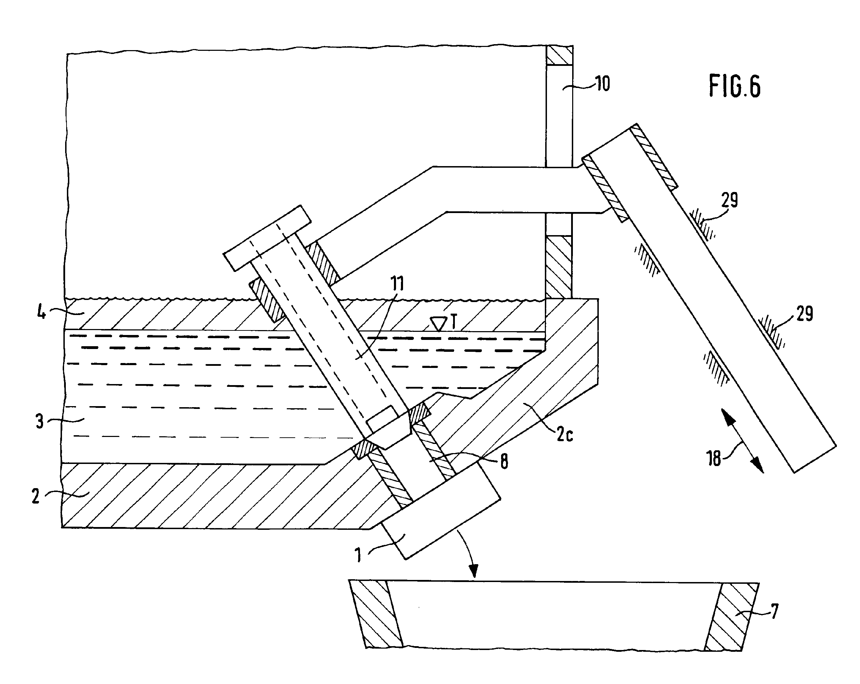

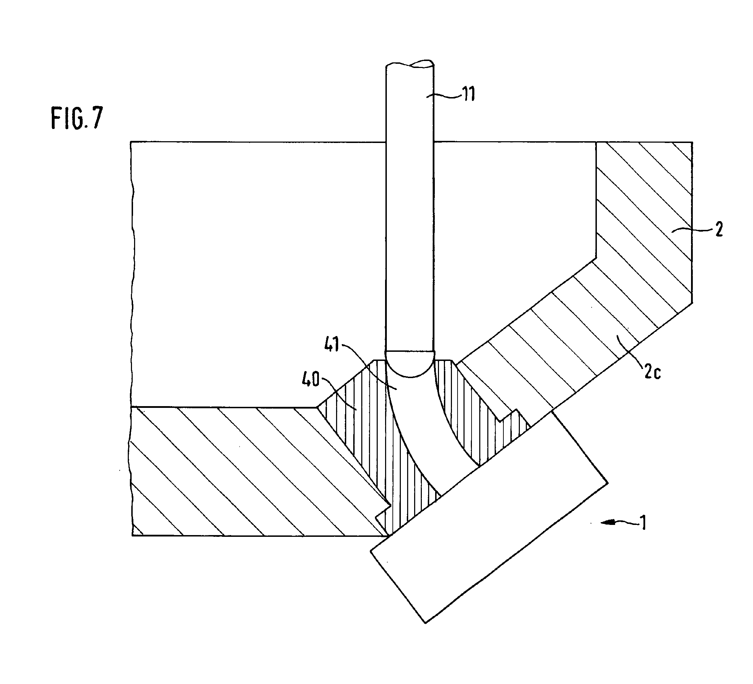

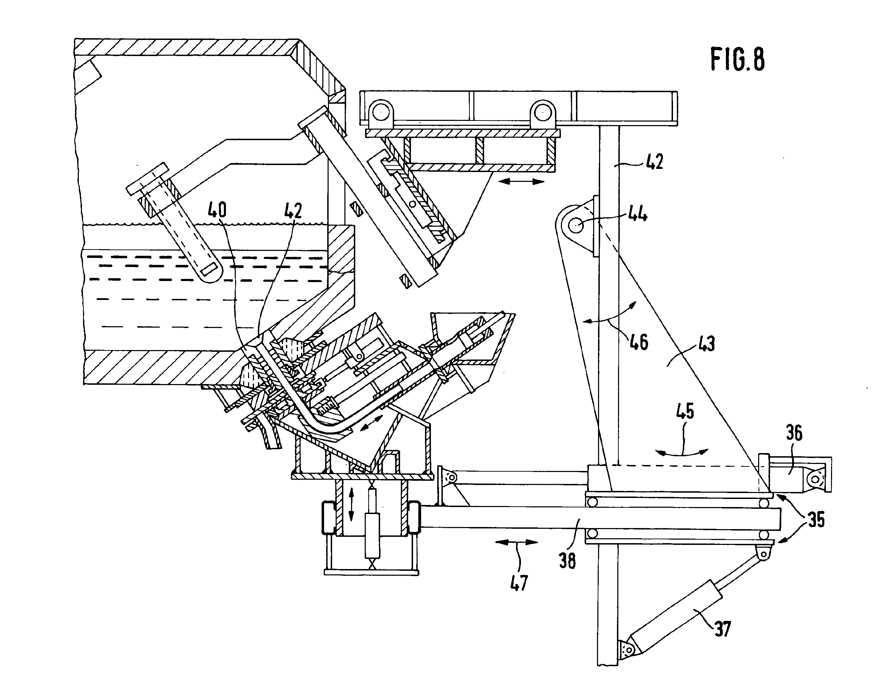

Gemäß den Fig. 6 und 7 ist der Schließstopfen 11 an einem Lochstein 40 mit im Raum oder zum Gefäßbodenbereich 2c senkrechten oder von der Senkrechten in einem Bogen 41 von 45° verlaufenden Abstichkanal 8 anpassbar. Gemäß Fig. 8 ist der Lochstein 40 mit einem geraden Verlauf 42 der Abstichkanalachse 8a ausgeführt.

Die horizontale Führungsbahn 35 mit dem horizontalen Antrieb 36 ist an einem Gerüst 42 über eine Schwinge 43 an einem Zapfengelenk 44 drehgelagert, um die Winkelbewegungen 45 durch Schwenkbewegungen 46 des weiteren Antriebs 37 aufzufangen. Ebenfalls werden Achsbewegungen 47 des Tragholms 38 berücksichtigt.

Ein Schieberwechsel verläuft nunmehr wie folgt:

Der Schließstopfen 11 wird zugefahren; der Schieberbaugruppen-Manipulator 13 fährt unter den verschlissenen Schieber 1a; der Hubantrieb 39 wird hochgefahren und stützt den Schieber 1a; Klemmbacken zwischen Schieber und Manipulator 13 werden manuell befestigt und geklemmt; Klemmteile zwischen Schieber und Gefäß werden manuell entfernt; der verschlissene Schieber 1a ist nunmehr frei; der Schieber 1 a wird losgerüttelt durch Betätigung des weiteren Antriebs 37; der Schieber 1a wird seitlich weggefahren; die Klemmbacken zwischen Schieber und Manipulator 13 werden gelöst; der verschlissene Schieber 1 a wird von einem Kran nach oben abgehoben vom Schieberbaugruppen-Manipulator 13; der neue Schieber 1b wird mit dem Kran in den Schieberbaugruppen-Manipulator 13 eingelegt und mit Klemmbacken befestigt; der Schieberbaugruppen-Manipulator 13 fährt unter das Gefäß; der Hubantrieb 39 drückt den Schieber 1b in die Zentrierbolzen am Gefäß; Klemmteile zwischen Schieber 1b und Gefäß 2 werden manuell eingelegt; die Klemmbacken zwischen Schieber 1b und Manipulator 13 werden entfernt und der Schließstopfen 11 wird gehoben und aus dem Gefäß 2 gefahren.

### Bezugszeichenliste

- 1: Schieberbaugruppe
- 1a: verschlissener Schieber
- 1b: neuer Schieber
- 1c: Drei-Stellungs-Schieber
- 2: metallurgisches Gefäß
- 2a: Elektroschmelzofen
- 2b: Gefäßwand
- 2c: Gefäßbodenbereich
- 3: Restsumpf
- 4: Schlacke
- 5: getrenntes Schiebersystem
- 6: Schlackenkübel
- 7: Stahlpfanne
- 8: Abstichkanal
- 8a: Abstichkanalachse
- 9: Gefäß-Inneres
- 10: Gefäßwandöffnung
- 11: Schließstopfen
- 12: Parkposition
- 13: Schieberbaugruppen-Manipulator
- 14: Füllmaterial-Behälter
- 15: Füllmaterial
- 16: Zuführeinrichtung
- 17: Schließstopfen-Manipulator
- 18: Bewegungsrichtungen
- 19: Mittelstellung des Schiebers

### Fortsetzung Bezugszeichenliste

- 20: Stellung des Schiebers
- 21: Stellung des Schiebers
- 22: gemeinsamer Tragrahmen
- 23: Antrieb
- 24: Transportrohr (beweglich gemeinsam mit Schieberplatten)
- 25: Durchgangsöffnung
- 26: Schubkolben
- 27: Führung für Transportrohr
- 28: Kamera
- 29: erste Führung
- 30: zweite Führung
- 31: Ebene der Öffnung
- 32: dritte Führung
- 33: Tragrahmen
- 34: Elektroden
- 35: horizontale Führungsbahn
- 36: horizontaler Antrieb
- 37: weiterer Antrieb
- 38: Tragholm
- 39: Hubantrieb
- 40: Lochstein
- 41: Bogen
- 42: Gerüst
- 43: Schwinge
- 44: Zapfengelenk
- 45: Winkelbewegungen
- 46: Schwenkbewegungen

## Patentansprüche

1. Verfahren zum Auswechseln einer Schieberbaugruppe an einem metallurgischen Gefäß, insbesondere an einem Elektroschmelzofen, wobei das Gefäß bis zu einem Restsumpf entleert wird,
**dadurch gekennzeichnet,**
**dass** gegen Ende der Standzeit des Schiebers der Abstichkanal durch einen in das Innere des Gefäßes eingefahrenen Schließstopfen verschlossen wird und dass nach Auslaufen der Restschmelze aus dem geschlossenen Abstichkanal, der verschlissene Schieber gegen einen neuen Schieber ausgewechselt und darnach der Schließstopfen aus dem Gefäß heraus in eine Parkposition gefahren wird.

2. Verfahren nach Anspruch 1,
**dadurch gekennzeichnet,**
**dass** nach dem Anfahren des Schließstopfens in Schließposition und nach dem Auslaufen der Restschmelze ein Schieberbaugruppen-Manipulator unter die Schieberbaugruppe gefahren, der verschlissene Schieber gestützt, durch Rütteln gelöst wird und dass danach per Kran der verschlissene Schieber ausgebracht und der neue Schieber eingebaut wird.

3. Verfahren nach einem der Ansprüche 1 oder 2,
**dadurch gekennzeichnet,**
**dass** zusammen mit dem Schieber ein Füllmaterial-Behälter mit Füllmaterial und Zuführeinrichtung gewechselt wird.

4. Verfahren nach einem der Ansprüche 1 bis 3,
**dadurch gekennzeichnet,**
**dass** die Schließstopfenbewegung senkrecht oder im Bogen und der Schieberausbau oder der Schiebereinbau senkrecht oder unter einem 45°-Winkel ausgeführt werden.

5. Einrichtung zum Auswechseln einer Schieberbaugruppe an einem metallurgischen Gefäß, insbesondere an einem Elektroschmelzofen, der senkrecht oder unter einem spitzen Winkel zur Horizontalen abstechbar ist, wobei das Gefäß bis auf einen Restsumpf entleerbar ist,
**dadurch gekennzeichnet,**
**dass** einer seitlichen Öffnung (10) in der Gefäßwand (2b) ein Schließstopfen-Manipulator (17) mit zumindest zwei unabhängigen Bewegungsrichtungen (18) zugeordnet ist und dass im Bereich des Abstichkanals (8) des Gefäßes (2) ein Schieberbaugruppen-Manipulator (13) zum Ausbau oder Einbau einer Schieberbaugruppe (1) vorgesehen ist.

6. Einrichtung nach Anspruch 5,
**dadurch gekennzeichnet,**
**dass** der Schieber (1a; 1b) aus einem Drei-Stellungs-Schieber (1c) besteht.

7. Einrichtung nach den Ansprüchen 5 und 6,
**dadurch gekennzeichnet,**
**dass** an einem gemeinsamen Rahmen (22) der Drei-Stellungs-Schieber (1c) mit einem Antrieb (23) und ein Füllmaterial-Behälter (14) mit einer Füllmaterial-Zuführeinrichtung (16), die ein Transportrohr (24) aufweist, das von dem Füllmaterial-Behälter (14) bis zur Durchgangsöffnung (25) des sich in Mittelstellung (19) befindlichen Drei-Stellungs-Schiebers (1c) geführt ist.

8. Einrichtung nach einem der Ansprüche 5 bis 7,
**dadurch gekennzeichnet,**
**dass** in dem Füllmaterial-Behälter (14) ein an das Transportrohr (24) angeschlossener Schubkolben (26) angeordnet ist.

9. Einrichtung nach Anspruch 5,
**dadurch gekennzeichnet,**
**dass** der Schließstopfen-Manipulator (17) mit einer Steuerung für quer und parallel zur Gefäßwandöffnung (10) und parallel zur Abstichkanalachse (8a) gerichteten Bewegungen (18) ausgestattet ist.

10. Einrichtung nach einem der Ansprüche 5 bis 9,
**dadurch gekennzeichnet,**
**dass** der Schließstopfen-Manipulator (17) mit einer ersten Führung (29), die parallel zur Abstichkanalachse (8a), einer zweiten Führung (30), die parallel zur Ebene (31) der Gefäßwandöffnung (10) und mit einer dritten Führung (32), die senkrecht zur Ebene (31) der Gefäßwandöffnung (10) verläuft, versehen ist.

11. Einrichtung nach Anspruch 5,
**dadurch gekennzeichnet,**
**dass** der Füllmaterialbehälter (14) mit dem Transportrohr (24) und dem Schubkolben (26) zusammen mit der Schieberbaugruppe (1) auf einem gemeinsamen Tragrahmen (22; 33) angeordnet sind.

12. Einrichtung nach Anspruch 11,
**dadurch gekennzeichnet,**
**dass** der Tragrahmen (22; 33) in einer horizontalen Führungsbahn (35) an den Abstichkanal (8) mittels eines horizontalen Antriebs (26) anstellbar ist.

13. Einrichtung nach einem der Ansprüche 11 oder 12,
**dadurch gekennzeichnet,**
**dass** die horizontale Führungsbahn (35) mittels eines weiteren Antriebs (37) im Winkel zur Horizontalen verstellbar ist.

14. Einrichtung nach einem der Ansprüche 11 bis 13,
**dadurch gekennzeichnet,**
**dass** der gemeinsame Tragrahmen (22; 33) auf einem Tragholm (38) der horizontalen Führungsbahn (35) mittels eines Hubantriebs (39) in der Höhe verstellbar ist.

15. Einrichtung nach einem der Ansprüche 5 bis 11,
**dadurch gekennzeichnet,**
**dass** der Schließstopfen (11) an einen Lochstein (40) mit im Raum oder zum Gefäßbodenbereich (2c) senkrechtem oder von der Senkrechten in einem Bogen (41) von 45° umlenkenden Abstichkanal (8) anstellbar ist.
